# EUROPEAN PATENT SPECIFICATION

(11) **EP 3 516 308 B1**
(45) Date of publication and mention of the grant of the patent: **16.11.2022**
(21) Application number: 16774474.7
(22) Date of filing: 26.09.2016
(51) Int. Cl.: C01F 7/441, C01F 7/444, C01F 7/445, B01J 6/00, F24S 20/20

(54) **PROCESS FOR PRODUCTION ALUMINUM OXIDE USING A HIGH TEMPERATURE RECEIVER**
VERFAHREN ZUR HERSTELLUNG VON ALUMINIUMOXID UNTER VERWENDUNG EINES HOCHTEMPERATUREMPFÄNGERS
PROCÉDÉ DE PRODUCTION D'OXYDE D'ALUMINIUM À L'AIDE D'UN RÉCEPTEUR HAUTE TEMPÉRATURE

(43) Date of publication of application: 31.07.2019
(73) Proprietor: Metso Outotec Finland Oy, 33900 Tampere (FI)
(72) Inventor: MISSALLA, Michael, 61440 Oberursel (DE); SCHNEIDER, Günter, 64653 Lorsch (DE); HERMANN, Ludwig, 1030 Wien (AT)
(74) Representative: Keil & Schaafhausen Patentanwälte PartGmbB
(86) International application number: PCT/EP2016/072832
(87) International publication number: WO 2018/054499

(56) References cited:
- SU-A1- 517 564
- US-A1- 2015 345 854
- ISABEL PADILLA ET AL: "The Application of Thermal Solar Energy to High Temperature Processes: Case Study of the Synthesis of Alumina from Boehmite", THE SCIENTIFIC WORLD JOURNAL, vol. 2014, 9 January 2014 (2014-01-09), pages 1-7, XP055380672, ISSN: 2356-6140, DOI: 10.1155/2014/825745

## Description

The present invention concerns a process for producing aluminum oxide out of aluminum hydrate in a calcination reaction at temperatures between 700 to 1500 °C in a reactor, which is heated directly and/or indirectly by a heat carrier.

Energy consuming and carbon dioxide emitting thermal processes are frequently intrinsic elements of the materials change in minerals and metal processing. Among the many examples of thermal technologies, calcination processes aim at the decomposition of chemical compounds in ores and releasing one of its constituents, mostly in the form of a gaseous chemically stable compound like water and/or carbon dioxide.

One process being of particular interest is Alumina production. The production of alumina usually is effected by the so-called Bayer process. In this process, mined minerals, above all the aluminum-containing bauxite, are comminuted and mixed with sodium hydroxide solution (NaOH). Insoluble residues, especially the red mud chiefly consisting of iron oxide, are separated from the dissolved aluminum hydroxide in form of sodium aluminate (Na[Al(OH)₄]). From the dilute aluminate lye pure aluminum hydroxide or aluminum hydrate Al(OH)₃ is precipitated. Afterwards, solid hydrate is removed by filtration and washed. Subsequently, a conversion of the aluminum hydrate to alumina (Al₂O₃) is effected by calcination.

The calcination of aluminum hydrate involves a very high expenditure of energy, since gibbsite (aluminum hydrate) is calcined at above 900 °C to achieve smelter grade alumina. About 750 kWh of energy is typically required for each ton of alumina produced. In the state of the art, the heat required for calcination is typically produced via combustion of natural gas, syngas, heavy fuel oil or coal.

Depending on the specific fuel used for heating of the aluminum hydrate, the green-house-gas (GHG) emissions are 56 to 107 t CO₂ equivalents per TJ (0.2 to 0.39 CO₂ equivalents per MWh), wherein lower emissions are obtained using natural gas as fuel and higher emissions are obtained using coal and coke as fuel. Typically, heavy oils provide GHG emissions between those extremes. Consequently, per ton of alumina 0.15 to 0.29 t fuel borne CO₂ equivalents are emitted to the atmosphere.

In 2015, about 115.247.000 t of alumina was produced globally. Consequently, about 25.000.000 t of fuel borne equivalents of GHG are emitted annually by the alumina production alone. Assuming a levelized price of about EUR 40,00 per CO₂ equivalent for the period 2020 to 2050, as forecasted in the 2015 Carbon Dioxide Price Forecast issued by the Synapse Energy Economics, Inc., global alumina production cost would increase by EUR 1.000.000.000 due to GHG emissions. Consequently, there is a demand for reducing CO₂ emissions and increasing energy efficiency in alumina production.

In the prior art, energy efficiency is increased by coupling heat sources and heat sinks in an attempt to lower the energy demand of the process and thus improve the profitability as well as the ecological balance.

In AU 2 005 237 179 A1 the waste gas of the calcining reactor is utilized as heat source for heating the washing water for the aluminum hydrate filtration. According to the chemical equation

2 Al(OH)₃ → Al₂O₃ + 3 H₂O

water is obtained in this reactor during the calcination. The waste gas withdrawn from the fluidized-bed reactor thus represents a mixture of the inert fluidizing gas of the reactor and the steam obtained by the reaction. The water condensed out of this mixture has a temperature of about 83 °C and is recirculated to the aluminum hydrate filter as washing water. In such a process it is, however, disadvantageous that due to the comparatively low water concentration (about 50%) in the waste gas of the calcining apparatus a higher water temperature of the condensate cannot be achieved and thus the purification in the hydrate filter is not carried out under optimal conditions, namely at a water temperature slightly below the boiling point.

The article " The Application of Thermal Solar Energy to High Temperature Processes: Case Study of the Synthesis of Alumina from Boehmite" written by Isabel Padilla, Aurora Lopez-Delgado, Sol López-Andrés, Marta Alvarez, Roberto Galindo, and Alfonso J. Vazquez-Vaamonde in the Scientific World Journal, Vol. 2014, January 1, 2014, pages 1 - 7 deals with a process of obtaining alumina from boehmite using a free, clean, and unlimited power source as the solar energy. Therein boehmite is transformed into alumina, in air atmosphere, using a solar energy concentrator (Fresnel lens).

SU 517 564 A1 teaches a process of producing alumina hydroxide from hydrargillite in a reactor, which is heated by hot alumina particles. The source of energy for heating this heat transfer medium is a conventional source, solar energy is not named.

US 2015/0345854 A1 is directed to process for performing a chemical reaction consisting of at least two sequential reversible steps characterized by being performed in a cycle, and to a reactor for performing such process. Therefore, a plant is provided wherein a solid reactant is reduced in a first reaction chamber with uptake of heat at a first temperature, and said solid reactant is subsequently oxidized in a second reaction chamber with release of heat at a lower second temperature. To dissipate heat after the first reaction chamber, the solid reactant is transferred to a first heat exchanger, wherein a solid medium is used as heat transfer medium. After the second reaction chamber, said heated heat transfer medium is used in a second heat exchanger to re-heat the solid reactant after the second reaction chamber. Further, the plant contains a receiver for further heating of the heat transfer medium, e.g. by solar radiation.

The required heat for the calcination of aluminum hydrate is commonly provided by combustion of a fuel inside a calcination reactor. For example WO 2012/062 593 A1 describes a process for the production of alumina from aluminum hydroxide, in which the required heat is provided by combustion of fuel inside a fluidized-bed reactor. Due to the reuse of heat energy via recirculation of solids and/or gases, the described process is highly energy efficient.

After about 40 years of continuous improvements in alumina production technology, the energy consumption was reduced to about 2700 MJ/t (about 750 kWh/t) alumina. In particular in view of the vast CO₂ emissions caused by alumina calcination and the environmental and economic costs connected thereto, there is still a demand for providing a process for alumina calcination with a reduced environmental footprint.

It is, therefore, the object of the present invention to reduce the environmental impact of alumina production and to increase its economic feasibility, especially regarding CO₂ emissions.

This object is solved by the subject matter of claim 1.

According to the present invention, a process for producing aluminum oxide is proposed, in which aluminum hydrate is calcined in a calcination reactor at temperature of 700 to 1500 °C, preferably 800 to 1200 °C, in particular 900 to 1100 °C, preferably 1000 °C ± 50 °C, mostly preferred 980 °C ± 20 °C.

The calcination reactor is heated directly and/or indirectly by a heat carrier in accordance with the invention. A direct heating is conducted by direct contact between the heat carrier and the aluminum hydrate. This is preferably promoted by mixing of the heat carrier and the aluminum hydrate. The indirect heat transfer is conducted by spatial separation of heat carrier and aluminum hydrate, such that a direct contact is prevented, but the thermal energy is transferred from the heat carrier to the aluminum hydrate. Such indirect heat transfer may be achieved by a thermal radiation transparent separation element or by employment of a second heat transfer medium.

In general, the heat carrier and aluminum hydrate may be conducted concurrently or counter-currently in the calcination step with the well-known advantages and disadvantages for these process versions.

The present invention further proposes to heat the heat carrier by solar radiation in a high temperature receiver. Such a high temperature receiver is typically located at the top of a tower and is irradiated by, preferably concentrated, solar power. Thereby, the energy required for the calcination of aluminum hydrate to produce aluminum oxide is provided with basically zero CO₂ emissions.

Preferably, moist aluminum hydrate having a moisture of 1 to 15 wt.-%, in particular 3 to 10 wt.-%, preferably 4 to 8 wt.-%, mostly preferred 6 wt.-% ± 1 wt.-%, is used in the calcination process. The moist hydrate may be preheated and/or dried before introduction to the calcination reactor. A direct introduction of the moist hydrate to the reactor is also possible. Mostly, a direct introduction has the advantage of a very fast heating of the hydrate, which due to the rapid temperature increase tends to burst into smaller particles, which increases the surface area of the material and thus promotes the calcination process. On the other hand, the preheating and/or drying increases energy efficiency, since waste heat may be used for said preheating and/or drying, which in turn decreases the energy demand in the calcination step. In this regard, it is mostly preferred to combine a direct introduction of hydrate to the calcination reactor and a preheating and/or drying step in order in one process in order to benefit from both effects described above and further to use the specific splitting of material introduced to the preheating and/or drying step and material introduced directly to the reactor for temperature control inside the reactor.

In a preferred embodiment, aluminum hydrate is calcined in a fluidized-bed inside the reactor. A fluidized-bed in general provides an efficient and uniform heat transfer to the fluidized material. In the present case this means a high energy transfer rate from the heat transfer carrier to the mixture of aluminum hydroxide and/or aluminum oxide.

The calcination of aluminum hydrate in a fluidized-bed is particularly preferred in cases the calcination reactor is heated directly, since both heat carrier and aluminum hydrate may be subjected to the same fluidized-bed. This achieves a very efficient heat transfer between the heat carrier and the aluminum hydrate due to a direct heat transfer.

If aluminum hydrate is heated indirectly by the heat carrier, it is preferred that the heat carrier transfers thermal energy to the fluidizing gas, which is preferably inert under the process conditions, used in the fluidized-bed of the reactor in which aluminum hydrate is calcined. In this case, two fluidized-beds may be employed both for the heat carrier and the aluminum hydrate. In a further embodiment, the heat carrier is transferred through heat transfer elements like cooling coils or plates located inside the fluidized-bed of the calcination and thus heating the aluminum hydrate indirectly.

It is particularly preferred that the aluminum oxide produced inside the calcination reactor and/or the heat carrier is/are subjected to a heat exchanger, which is preferably a fluidized-bed heat exchanger. Thereby, the thermal energy of the calcined product and/or the heat carrier may be recuperated and used elsewhere in the inventive process, e.g. for preheating and/or drying of the aluminum hydrate and/or for power generation. Thereby, energy efficiency of the process is increased even further.

In this regard it is particularly preferred that water is used as a coolant in the above mentioned heat exchanger and is further converted to steam, which then may be used for power generation. This offers an additional use of generated energy and better possibilities of storing and/or selling this energy. Preferably, the water is guided through heat exchange elements disposed inside the heat exchanger, preferably inside the fluidized-bed of the heat exchanger.

In a preferred embodiment, the heat carrier is stored in a storage silo, which is preferably located upstream of the reactor. Preferably, the hot heat carrier removed from the high temperature receiver is subjected to and stored in the storage silo. Mostly preferred, the hot heat carrier stream from the high temperature receiver is partly guided to the calcination reactor and partly guided to the storage silo. In accordance with a preferred embodiment, the storage silo is thermally isolated such that the temperature decrease of the stored heat carrier is less than 100 °C per hour, preferably less than 50 °C per hour, mostly preferred less than 10 °C per hour. Thereby, the stored material maintains most of its thermal energy and a continuous process even during night time is possible and the calcination is independent from the solar irradiation, at least for less than10 hours. In combination with a power generation and the storage step described above, the calcination process described in the current application allows to increase the capacity factor of concentrated solar power (CSP) calcination plants to 65 to 85% if comparing the availability of the CSP calcination plant with the availability of CSP power plants.

Solar thermal energy currently is collected by two systems: line focus and point focus. Line focus is less expensive and less efficient. Point focus - concentrating the sunlight collected by mirrors surrounding a central tower on a point at the top of the tower, has a much larger potential with regard to efficiency and storage. Therefore, in a preferred embodiment, a plurality of heliostats is used to direct the solar radiation to the high temperature receiver, such that the heat carrier is heated by the solar radiation in the high temperature receiver. Preferably, the orientation of these heliostats is adjustable to the position of the sun to maximize the intensity of the solar radiation directed to the high temperature receiver.

In a further embodiment, the used heat transfer carrier comprises a stream of solid particles or may even consist thereof. This offers the possibility that at least parts of said solid particles are fluidized in the reactor together with the alumina hydrate and, therefore, a direct heat transfer with high energy transfer rates are possible. It is most preferred that for a more easy transport these solid particles are fluidized during the whole process.

It is particularly preferred, that the solid particles used as heat carrier do not exhibit any phase transition under the overall process conditions. Mostly preferred, the solid particles have a melting point of more than 1200 °C, preferably more than 1300 °C and mostly preferred more than 1400 °C. This prevents any melting of the heat carrier, which not only consumes energy and, therefore, is detrimental to energy efficiency, but also would result in clogging of the apparatus used in accordance with the invention.

Preferably, the material of the solid particles is selected from the group comprising sand, aluminum oxide, alkaline earth metal halides and/or sulfates, such as fluorite, especially CaF₂, calcium sulfate or barium sulfate. Mixtures of these compounds may be used as well.

In a particularly preferred embodiment, the heat carrier is separated from the aluminum oxide produced by the particle size of the heat carrier and the produced aluminum oxide after the mixing in the fluidized bed. Naturally, this requires the mean particle size and/or the respective particle size distribution of the heat carrier and the produced aluminum oxide to at least partly differ from each other.

With regard to the question of separation, it is mostly preferred that aluminum oxide is used as a heat transfer carrier. It was observed that with increased residence time of the reactants, the particle size is decreasing to a specific particle size minimum 8-150 µm, which is most likely explained with abrasion during the process. In accordance to a particular preferred embodiment, smaller particles having a particle size of less than 8-150 µm are discharged from the process as a product. The larger particles having a particle size of more than 8-150 µm are recycled to the high temperature receiver and are, thus, maintained inside the calcination process. Therefore, even in cases of abrasion the product is not contaminated by the heat transfer carrier since the heat transfer carrier itself is the target product.

In a preferred embodiment of the calcination process, the heat carrier has a temperature of 200 to 400 °C, in particular 250 to 350 °C, preferably 300 °C ± 30 °C, upon introduction to the high temperature receiver and has a temperature of 1000 to 1200 °C, in particular 1050 to 1150 °C, preferably 1100 °C ± 30 °C, upon discharge from said high temperature receiver. In this regard it is preferred that the hot heat transfer carrier discharged from the high temperature receiver is at least partly directly charged to the reactor, which allows minimizing heat losses during transportation of the heat carrier. In this context, direct charging of the heat carrier implies that only conduits and valves are passed by the heat carrier upon transportation of the same from the high temperature receiver to the reactor.

It is further preferred that the heat carrier is discharged from the reactor with a temperature of 500 to 700 °C, in particular 550 to 650 °C, preferably 600 °C ± 30 °C and is subsequently cooled in a heat exchanger, which is preferably a fluidized-bed cooler. The thus cooled heat carrier has preferably a temperature of 200 to 400 °C, in particular 250 to 350 °C, preferably 300 °C ± 30 °C and is subsequently introduced again to the high temperature receiver. Thereby, a particularly energy efficient process is achieved.

Preferably a plant is configured to perform the calcination process described above. The plant comprises a reactor, in which the calcination reaction takes place at temperatures between 700 to 1500 °C, preferably 800 to 1200 °C, in particular 900 to 1100 °C, preferably 1000 °C ± 50 °C, mostly preferred 980 °C ± 20 °C., wherein the aluminum hydrate is heated directly and/or indirectly by a heat carrier. The plant further comprises a high temperature receiver for heating said heat carrier using solar radiation. In other words, the high temperature receiver is configured to heat the heat transfer carrier by solar radiation directed to said high temperature receiver.

In a preferred embodiment, the reactor comprises a separation wall, which divides the reactor in at least two chambers. Thereby the aluminum hydrate and the aluminum oxide produced inside the reactor can be separated from the heat carrier, which can be conducted separately through the reactor. Naturally, the separation wall allows a heat transfer from one side to the other, such that thermal energy from the hot heat carrier may be transferred to said aluminum hydrate. This embodiment allows an indirect heat transfer between the heat carrier and the aluminum hydrate. Thereby, any mixture of product and heat transfer carrier.

Preferably, the reactor can be a fluidized bed reactor having the advantage of a very good heat transfer. All types of fluidized bed reactors, especially stationary fluidized bed reactors, annular fluidized bed reactors and circular fluidized bed reactors are possible.

In a further embodiment, the reactor may comprise a pre-chamber, which is configured to transfer thermal energy of the heat carrier to a second heat transfer medium, such as air, which is subsequently guided to a main chamber in order to heat the aluminum hydrate therein.

In addition or as an alternative, the reactor may further be configured to mix aluminum hydrate / oxide with the heat transfer carrier, preferably inside a fluidized bed. This embodiment corresponds to a direct heat transfer between the heat carrier and the aluminum hydrate. Although the direct heat transfer allows the most efficient transfer of thermal energy, it generally requires a further element, such as a particle separator, which is why the separation wall and the indirect heat transfer generally allow the simplest plant configurations. Furthermore, the indirect heat transfer may be easier to implement to existing solar plants in order to increase the plant's capacity factor (availability of the plant in relation to continuous, 24/365 production).

In a further preferred embodiment, the plant comprises at least one heat exchanger located downstream of the reactor, wherein the flow direction of the heat carrier and/or the produced aluminum oxide is regarded. In other words, the heat carrier and/or the produced aluminum oxide is/are subjected to the heat exchanger after being removed from the reactor. Therefore, the heat exchanger, which is preferably a fluidized-bed heat exchanger, is configured to receive the heat carrier and/or aluminum oxide from the calcination reactor and preferably fluidizing gas for fluidization of said heat carrier and/or aluminum oxide. In particular for the direct heat transfer inside the reactor, it is preferred to simply subject the heat carrier and aluminum oxide mixture to the heat exchanger and cool both simultaneously. This has the advantage that the thermal energy of both can be regained in a simple and cost efficient manner, since the same heat exchanger is used for both materials.

In a further preferred embodiment, the plant comprises at least one storage silo for receiving the hot heat carrier, preferably directly from the high temperature receiver, and storing of said heat carrier for an adjustable duration. In other words, the storage silo is configured to receive and store hot heat carrier. Preferably, the storage silo comprises a thermal insulation in order to maintain the temperature of the stored heat carrier and to minimize heat losses. In case the solar radiation is not sufficient for heating the heat carrier to the required temperature, e.g. due to clouds or other disturbances in the intensity of the solar radiation, stored hot heat carrier can be removed from the storage silo and be subjected to the reactor in order to maintain the required calcination temperature therein. Mostly preferred the storage silos size is adjusted such that the plant can be operated continuously, even at night times. Consequently, the calcination and a preferred production of electricity are independent from solar irradiation, which increases the capacity factor, (a term used for concentrated solar power plant to express the availability of the plant relative to 24/365=100% availability) of the plant to 65 to 85%.

In a particular preferred embodiment, a plurality of heliostats is employed to direct solar radiation towards the high temperature receiver. These heliostats are preferably adjustable, such that their orientation allows directing the solar radiation to the high temperature receiver independently from the position of the sun. Thereby, the solar radiation can be focused onto the high temperature receiver, such that the intensity of the radiation is maximized and the heat carrier is heated to the required temperatures.

In another preferred embodiment, the plant comprises a particle separator located downstream of the reactor. Such a particle separator is configured to separate the aluminum oxide produced from the heat carrier by different particle sizes, e.g. a cyclone or any kind of filter. In another embodiment, said particle separator or a further particle separator may also be configured to separate aluminum oxide from unreacted aluminum hydrate.

Developments and advantages in application possibilities of the invention also emerge from the following description of the process. All features described and/or illustrated in the drawings form the subject matter of the invention are per se or in any combination independent of their inclusion in the claims or their back references.

In the figures:
- Fig. 1: shows a first embodiment, in which the aluminum hydrate is calcined using a direct heat exchange with the heat carrier,
- Fig. 2: shows a second embodiment, in which the aluminum hydrate is calcined using an indirect heat exchange with the heat carrier.

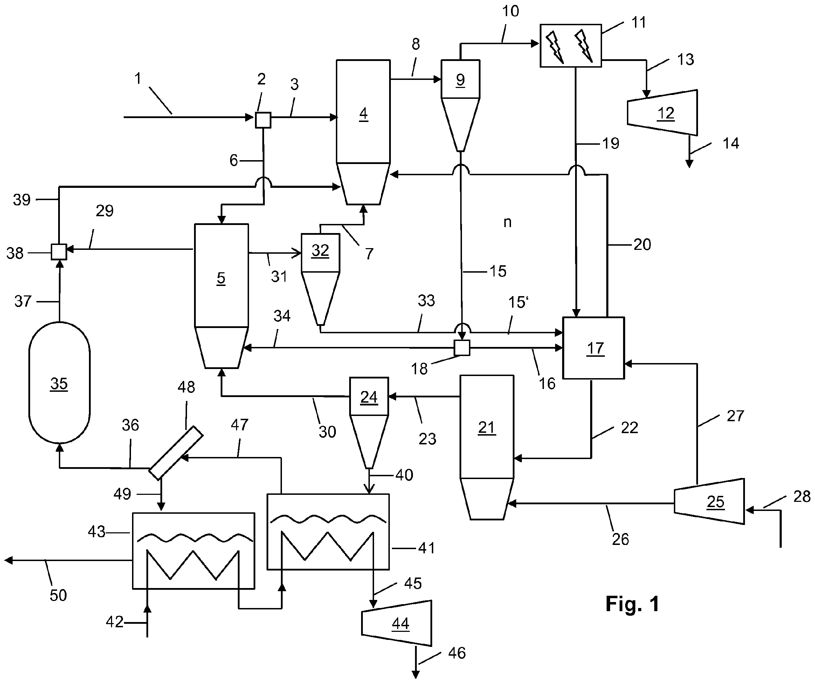

Fig. 1 shows a first embodiment of plant configured to perform the calcination process in accordance with the invention. Wet aluminum hydrate, preferably having a temperature of 60 °C and moisture of 5,66 wt.-%, is introduced to the calcination process via conduit 1 at e.g. a rate of 212 t/h and is divided into two streams by splitter 2. More than the half of the aluminum hydrate introduced to the process, in one example 80.5 wt.-% of the complete amount, , is conducted via conduit 3 to venturi 4 for preheating and drying. The remaining section, in this example 19.5 wt.-% of the complete aluminum hydrate, is introduced into fluidized-bed reactor 5 for calcination to aluminum oxide for temperature control via conduit 6.

Following the main part of the moist aluminum hydrate introduced to the process, the hydrate is dried and pre-heated to 110 °C inside venturi 4. Therefor a gas stream, preferably air, possibly with entrained solids and vaporized water, is introduced by conduit 7 into venturi 4. It is also possible to direct a small portion of the heat carrier to venturi 4 via conduit 39 as will be described later.

The gas stream introduced via conduit 7 is adjusted such that all preheated and at least partly dried aluminum hydrate is guided by conduit 8 to cyclone 9, in which air and entrained solids are separated.

Venturi 4 and cyclone 9 in combination form (with the respective conduits) a preheating stage. In accordance with the invention several preheating stages may be employed n-times. Each air outlet of the cyclone assigned to an upstream preheating stage, guides the air to the inlet of the venturi assigned to a respective downstream preheating stage. In a similar manner, the solid outlet of the cyclone assigned to a downstream preheating stage introduces the solids to a venturi of a respective upstream preheating stage. In such a manner several preheating stages may be employed depending on the specific requirements of the process or plant. With each preheating stage, the temperature of the aluminum hydrate is increased and further drying may be achieved. For example in a second preheating stage the temperature inside the respective venturi may be 280 °C, whereas the temperature inside the respective venturi of the first preheating stage may be 110 °C . In general, the number of preheating stages is selected such that energy recovery is maximized for the system.

The flue gases from cyclone 9 (or the respective cyclone of the last preheating stage) are removed via conduit 10 and are subjected to a dust removal apparatus 11, e.g. an electrostatic precipitator (ESP), in order to clean the flue gases from entrained material. The flue gases for example have 50 mg/Nm³ of dust content left (Nm³ referring to the volume of the respective gas at normal conditions, namely p = 1.01 barA, T =273,16 K and are finally guided into turbine 12 via conduit 13. The turbine 12 utilizes the gas velocity of the flue gases to generate power, which may be stored or used elsewhere. Finally, the cleaned flue gases with a typical temperature of 112 °C (with two preheating stages employed) and at a typical rate of 141770 Nm³/h are discharged via conduit 14 and via a not shown stack into the atmosphere.

Separated solids, obtained in cyclone of the last preheating stage, here cyclone 9, are discharged via conduit 15 and are guided via conduit 16 to mixer 17 passing splitter 18. By adjustment of the amount of solids subjected to reactor 5 and the amount of solids subjected to mixer 17 by splitter 18, the calcination temperature may be controlled. From there, they are introduced to mixer 17 via conduit 15'. The remaining solids (in this example 35 wt.-%) are introduced directly into reactor 5 as will be described in further detail below. The solids separated by dust removal apparatus 11 are guided via conduit 19 to mixer 17.

Mixer 17 is mainly used for air mixing. In principle, additional mixers may be employed at several stages of the process. So-called dirty air, corresponding to air including entrained solids and water vapor, is removed from mixer 17 via conduit 20 and is introduced at least partly into venturi 4 of the first preheating stage. If several preheating stages are employed, the dirty air may also be introduced at least partly to the last preheating stage or may be split by a splitter (not shown) in order to adjust the amount of dirty air introduced to the respective preheating stages.

Both venturi 21 and mixer 17 are supplied with air from blower 25 via conduits 26 and 27, respectively, and serve as air preheating stages. In particular, the air supplied via conduit 28 to blower 25 is preheated by heat exchange with the hot solids in mixer 17 and venturi 21. For a typical process, 30 000 Nm³/h air with a temperature of 25 °C are introduced by conduit 28 to the process. In mixer 17 acting as an air preheating stage the preheated air entrains solids and contains vaporized water (dirty air) and is subjected to the respective preheating stages via conduit 20 as explained above.

The solid particles are removed from mixer 17 and are fed to venturi 21 by conduit 22. In such an embodiment, the venturi 21 works as a gas-preheater by transfer of the residual heat from the calcined aluminum oxide and/or heat carrier to the air, which is removed from the venturi 21 together with solids being entrained in said air via conduit 23. A typical temperature in mixer 17 is 831°C and a typical temperature in venturi 21 is 806 °C. The air/solids mixture from venture 24 is introduced into cyclone 24, in which both are separated.

Now turning to the aluminum hydrate fed to reactor 5 via conduit 6, the hydrate is calcined e.g. with a typical temperature of 980 °C inside reactor 5. The calcination heat is provided by a heat transfer carrier fed to reactor 5 via conduit 29. For the described process step, a temperature of 1100 °C and a mass flow rate of 1057 t/h is typical.

In reactor 5 the thermal energy provided by the heat transfer carrier is transferred to the aluminum hydrate by direct mixing since the reactor is designed as a fluidized bed reactor. Fluidization air is supplied via conduit 30 to reactor 5. Preferably, this air was preheated inside venturi 21 and separated from solids in cyclone 24 as explained above. The calcined product together with the heat carrier is subjected via conduit 31 to cyclone 32, in which the solids entrained are separated from the air. The solids separated are removed from cyclone 32 via conduit 33 and are introduced into mixer 17.

In a similar manner compared to venturi 4 and cyclone 9 forming a preheating stage, the reactor 5 and cyclone 32 form a calcination stage, the general layout of which may be employed several times in order to adjust calcination time and energy efficiency. For example a second calcination stage may be employed (not shown) comprising of a further calcination reactor and a downstream cyclone. In this case the solids removed from cyclone 32 are introduced into the second calcination reactor, are guided to a second cyclone and then are introduced into mixer 17 as described above. For such a second calcination stage, the air would be introduced firstly into the reactor of the second calcination stage and would be guided via the cyclone of the second calcination stage to the reactor of the first calcination stage. Subsequently, the above described path is followed.

In addition a further stream of preheated aluminum hydrate and possibly calcined aluminum oxide and heat carrier may be introduced via conduit 34 from splitter 18 into reactor 5. Since the stream of solids from conduit 34 exhibits a temperature basically corresponding to the temperature of the last preheating stage (e.g. 280 °C or 110 °C), adjustment of the size of stream in conduit 34 via splitter 18 allows to further control the temperature inside reactor 5.

Concluding, the described embodiment allows controlling the calcination temperature by adjustment of the ratio of streams in conduits 3 and 6 and the ratio of streams in conduits 16 and 34. In other words, the calcination temperature control may be *inter alia* based on the control of splitters 2 and 18 and a quick adjustment of the process conditions is possible. Thereby, the process can react to changes in the energy supplied, e.g. caused by cloud movement, such that overheating of the solids is prevented, which is detrimental to energy efficiency and product quality.

Now turning focus on the heat carrier, the same is introduced to a high temperature receiver (typically a receptacle to which the solar radiation is focused, absorbed and distributed to the material inside in a way that heating can be maximized as long as the heliostats are exposed to the sun) 35 via conduit 36. A typical temperature is here an inlet temperature of 300 °C and a typical mass flow rate 1057 t/h. In high temperature receiver 35, the heat carrier is heated by solar radiation, e.g. to temperatures of 1100 °C corresponding to a power of 296.6 MW.

The heat carrier is preferably alumina oxide, but also other solids such as sand or calcium salts may be used. The hot heat carrier is removed via conduit 37 and guided to splitter 38, in which the stream of hot heat carrier may be split into at least two streams. Preferably, all streams are fluidized. One stream is guided via conduit 29 to reactor 5 as described above. Another partial stream of hot heat carrier may be guided via 39 to venturi 4 of the preheating stage. This allows adjustment of the temperature in the preheating stage. In particular for starting operation of the plant, it is preferred to subject a part of the heat carrier to the preheating stage. Thereby, the initial low temperature of the air subjected to the preheating stage may be compensated and sufficient preheating and/or drying is achieved. A further partial stream (not shown) may be directed to a storage silo (not shown).

The hot heat carrier introduced to reactor 5 is mixed with the aluminum hydrate for direct heat transfer. Thereby, the reactor 5 itself works as a mixing chamber. The solids, comprising heat carrier, aluminum oxide (calcine) and possibly unreacted aluminum hydrate, are removed via conduit 31 as described earlier. After passing cyclone 32, mixer 17, venturi 21 and cyclone 24 the solids are introduced via conduit 40 to heat exchanger 41.

In heat exchanger 41, preferably built as a fluidized bed cooler, heat from the solids introduced is recovered by a heat transfer medium, in this case water, introduced via conduit 42 to a second fluidized-bed cooler 43 at a typical temperature of 50°C and a pressure of 55 bar.

Downstream of heat exchanger 43, preferably built as a fluidized bed cooler, the temperature of the heat transfer medium has increased, e.g. to 246 °C, and is fed to heat exchanger 41, in which the water is further heated, e.g. to 450 °C, whereby steam is generated. The heat transfer medium is guided through heat transfer elements, e.g. being employed inside the respective fluidized-beds in cooler 41 and 42. Thereby, the solids are cooled and the heat transfer medium, here water, is converted into steam being fed to turbine 44 via conduit 45 at a rate of 248 t/h. Preferably the turbine 44 is a high efficiency turbine with an efficiency of 85% and generates electricity. With the parameters given as examples, electric power of 64.8 MW is generated. Therefore, the described process allows omitting of any conventional carbonaceous fuel for aluminum oxide calcination and even provides electric power in excess.

The steam leaves turbine 44 via conduit 46 and is fed to a not shown condenser. The condensate of said condenser may be again fed to fluidized-bed cooler 43 via conduit 42, thereby providing a closed heat transfer medium cycle. The cooling water for the condenser is typically supplied thereto at a temperature, e.g. of 30 °C, and removed therefrom, e.g. at 40 °C, in both cases e.g. at a rate of 12 863 t/h.

Both heat exchangers 41 and 43 are preferably built as fluidized bed coolers supplied with fluidizing air, depending on the area of the respective fluidized-bed. Typical values are 9850 Nm³/h of air at 25 °C to fluidized-bed cooler 41 and 2380 Nm³/h of air at 25 °C to fluidized-bed cooler 43.

The solids introduced via conduit 40 are cooled to 300 °C in heat exchanger 41 and are removed therefrom via conduit 47. Subsequently, the product aluminum oxide is isolated in a particle separator 48, e.g. a sieve, and introduced to heat exchanger 43 via conduit 49. Being cooled e.g. to 70 °C in heat exchanger 43, the product is discharged from the process via conduit 50.

The remaining solids separated from the product via particle separator 48 are recycled to high temperature receiver 35 via conduit 36 at a temperature of 300°C as described above. Tt is further preferred, that the particle separator 48 removes solids having a particle size of less than 8-150 µm, which ensures that only calcined aluminum oxide is removed and aluminum hydrate is maintained in the process.

The use of aluminum oxide as a heat transfer carrier is preferred due to the fact that even in cases of problems in separating heat transfer carrier and the target product still high product purity is ensured. However, in this case a not shown conduit has to mix a product stream into the heat transfer cycle before it enters the high temperature receiver 35 to compensate losses of the heat transfer carrier.

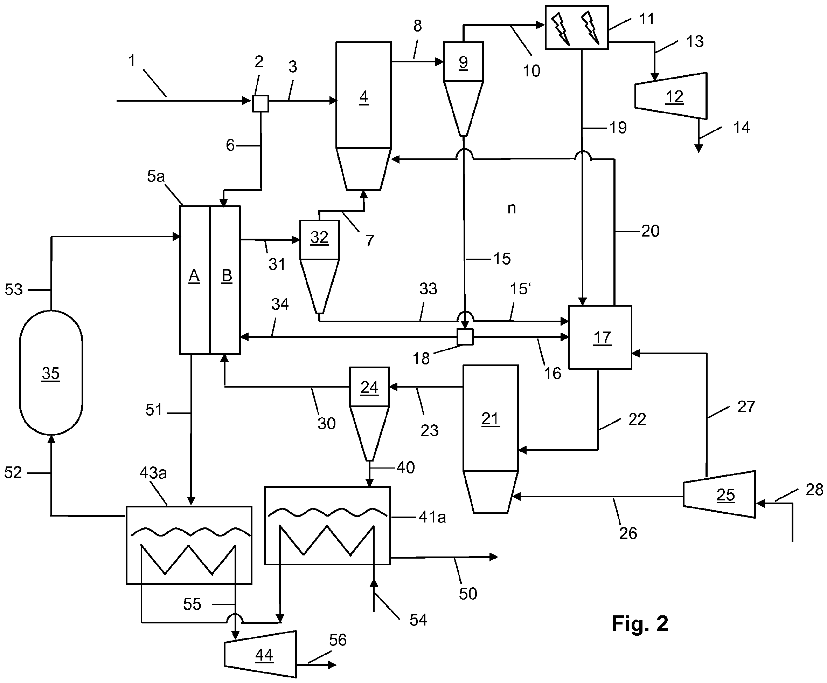

In a second embodiment shown in figure 2, the heat transfer is conducted indirectly, such that there is no mixing and no direct contact of heat carrier and aluminum hydrate or aluminum oxide. The following discussion focuses on the differences between the embodiments of figure 1 and 2; the elements being identical to figure 1 are referred to using the same reference numbers.

In the embodiment shown in figure 2, the indirect heat transfer is conducted by providing a reactor 5a having two separate chambers A and B for receiving the aluminum hydrate and the heat transfer carrier. Both chambers are isolated from each other by a separation wall, such that thermal energy can be transferred from the heat carrier to the aluminum hydrate, but a direct contact of both materials is prevented. In an alternative embodiment (not shown), the thermal energy may be transferred through or via a further heat transfer medium, such as air.

Turning focus on the heat carrier, e.g. sand, the same is heated in the high temperature receiver 35 as described earlier and removed therefrom by conduit 53. The hot heat carrier, e.g. having a temperature of 1100 °C .is directly introduced to chamber A of reactor 5a for calcining aluminum hydrate or is stored in a storage silo (not shown), in particular for use during the night and allowing continuous operation of the plant. Having passed through chamber A of reactor 5a, the heat carrier is removed from the reactor 5a via conduit 51, e.g. at a temperature of 600 °C, and is introduced to heat exchanger 43a, in which the heat carrier is cooled, e.g. to 300 °C, and removed via conduit 52. Subsequently, the cooled heat carrier is reintroduced to high temperature receiver by conduit 52, e.g. at 300 °C to be reheated therein. In this embodiment, the heat carrier is guided in a closed internal recycling loop.

Now focusing on the passage of the aluminum hydrate, the same is introduced into the second chamber B of reactor 5a by conduits 6, 30 and 34 as described above. The solids are removed. e.g. at 980 °C, from chamber B by conduit 31 and are processed further by cyclone 32 as was also explained in detail above. Finally, the current embodiment deviates from the embodiment of figure 1 in that a particle separator may be omitted. Rather, the pure aluminum oxide removed from cyclone 24 is introduced to heat exchanger 41 via conduit 40 and is cooled, e.g. to 70 °C. Since aluminum oxide is obtained at a sufficient purity, no further separation step is required.

Both heat exchangers 41a and 43a are connected in series and are fed with water as a cooling medium, introduced via conduit 54, for example at 50 °C and 55 bar. Via heat transfer from the solids, the water is heated, e.g. to 246 °C. in heat exchanger 41a. Subsequently, it is introduced to heat exchanger 43a and is converted to steam, for example having a temperature of 450 °C and a pressure of 50. The steam is removed from heat exchanger 43a via conduit 55 and is introduced to turbine 4 (with a typical efficiency of 85%). Using the given example values 24.7 MW of electric power are generated.

From turbine 44 steam is removed via conduit 56 and may be cooled in a condenser (not shown) as described above. Compared to the direct heating described in figure 1, less electric power is produced, due to heat losses caused by the indirect heat transfer. However, a further separation step may be omitted and the process described in figure 2 may be easier to implement to existing plants.

### Reference numbers

- 1: conduit
- 1: splitter
- 3: conduit
- 4: venturi
- 5 and 5a: reactor
- 6-8: conduit
- 9: cyclone
- 10: conduit
- 11: dust removal apparatus
- 12: turbine
- 13-16: conduit
- 17: mixer
- 18: splitter
- 19 and 20: conduit
- 21: venturi
- 22 and 23: conduit
- 24: cyclone
- 25: blower
- 26-31: conduit
- 32: cyclone
- 33 and 34: conduit
- 35: high temperature receiver
- 36 and 37: conduit
- 38: splitter
- 39 and 40: conduit
- 41, 41a: heat exchanger
- 42: conduit
- 43, 43a: heat exchanger
- 44: turbine
- 45-47: conduit
- 48: separator
- 49-56: conduit

## Claims

1. A process for producing aluminum oxide out of aluminum hydrate in a calcination reaction at temperatures between 700 to 1500 °C in a reactor, which is heated directly and/or indirectly by a heat carrier, **characterized in that** the heat carrier is heated by solar radiation in a high temperature receiver.

2. A process according to claim 1, **characterized in that** aluminum hydrate is calcined in a fluidized-bed inside the reactor.

3. A process according to any the preceding claims, **characterized in that** after passing the reactor the aluminum oxide and/or the heat carrier is/are subjected to a heat exchanger.

4. A process according to claim 3, **characterized in that** water is used as a coolant and converted to steam, which is used for power generation.

5. A process according to any the preceding claims, **characterized in that** the heat carrier is stored in a storage silo.

6. A process according to any the preceding claims, **characterized in that** the solar radiation is directed to the high temperature receiver by a plurality of heliostats.

7. A process according to any of claims 2 to 6, **characterized in that** the heat carrier comprises a stream of solid particles with a melting point of more than 1200 °C and at least parts of said solid particles are fluidized in the reactor together with the alumina hydrate.

8. A process according to any of claims 2 to 7, **characterized in that** the heat carrier is separated from the produced aluminum oxide using the particle size of the heat carrier and the produced aluminum oxide.

9. A process according to any the preceding claims, **characterized in that** the heat carrier is subjected to the high temperature receiver with a temperature of 200 to 400 °C, is discharged from the same with a temperature of 1000 to 1200 °C and subsequently charged to the reactor, from which the heat carrier is discharged with a temperature of 500 to 700 °C and cooled in a heat exchanger to temperatures of 200 to 400 °C and is subsequently recycled to the high temperature receiver.

## Patentansprüche

1. Verfahren zur Herstellung von Aluminiumoxid aus Aluminiumhydrat in einer Kalzinierungsreaktion bei Temperaturen zwischen 700 und 1500 °C in einem Reaktor, der direkt und/oder indirekt durch einen Wärmeträger beheizt wird, **dadurch gekennzeichnet, dass** der Wärmeträger durch Sonnenstrahlung in einem Hochtemperaturempfänger beheizt wird.

2. Verfahren nach Anspruch 1, **dadurch gekennzeichnet, dass** Aluminiumhydrat in einem Wirbelbett innerhalb des Reaktors kalziniert wird.

3. Verfahren nach einem der vorhergehenden Ansprüche, **dadurch gekennzeichnet, dass** das Aluminiumoxid und/oder der Wärmeträger nach dem Passieren des Reaktors einem Wärmetausch unterzogen wird/werden.

4. Verfahren nach Anspruch 3, **dadurch gekennzeichnet, dass** Wasser als Kühlmittel verwendet und in Dampf umgewandelt wird, welcher zur Energieerzeugung verwendet wird.

5. Verfahren nach einem der vorhergehenden Ansprüche, **dadurch gekennzeichnet, dass** der Wärmeträger in einem Vorratssilo gelagert wird.

6. Verfahren nach einem der vorhergehenden Ansprüche, **dadurch gekennzeichnet, dass** die Sonnenstrahlung durch eine Vielzahl von Heliostaten auf den Hochtemperaturempfänger gerichtet wird.

7. Verfahren nach einem der Ansprüche 2 bis 6, **dadurch gekennzeichnet, dass** der Wärmeträger einen Strom von Feststoffpartikeln mit einem Schmelzpunkt von mehr als 1200 °C umfasst und zumindest ein Teil der Feststoffpartikel zusammen mit dem Aluminiumoxidhydrat im Reaktor fluidisiert wird.

8. Verfahren nach einem der Ansprüche 2 bis 7, **dadurch gekennzeichnet, dass** der Wärmeträger von dem erzeugten Aluminiumoxid anhand der Teilchengröße des Wärmeträgers und des erzeugten Aluminiumoxids getrennt wird.

9. Verfahren nach einem der vorhergehenden Ansprüche, **dadurch gekennzeichnet, dass** der Wärmeträger mit einer Temperatur von 200 bis 400 °C dem Hochtemperaturempfänger zugeführt, aus diesem mit einer Temperatur von 1000 bis 1200 °C ausgetragen und anschließend dem Reaktor zugeführt wird, aus dem der Wärmeträger mit einer Temperatur von 500 bis 700 °C ausgetragen und in einem Wärmetauscher auf Temperaturen von 200 bis 400 °C abgekühlt und anschließend in die Hochtemperaturvorlage zurückgeführt wird.

## Revendications

1. Procédé de production d'oxyde d'aluminium à partir hydrate d'aluminium dans une réaction de calcination est température compris entre 700 et 1500 °C dans un réacteur, qui est chauffé directement et/ou indirectement au moyen d'un agent caloporteur, **caractérisé en ce que** l'agent caloporteur est chauffé par rayonnement solaire dans un récepteur à haute température.

2. Procédé selon la revendication 1, **caractérisé en ce que** les draps d'aluminium est calciné dans un lit fluidisé situé à l'intérieur du réacteur.

3. Procédé selon l'une quelconque des revendications précédentes, **caractérisé en ce qu'**après le passage dans le réacteur, l'oxyde d'aluminium et/ou l'agent caloporteur est/sont soumis à un échangeur de chaleur.

4. Procédé selon la revendication 3, **caractérisé en ce que** de l'eau est utilisée en tant qu'agent refroidissement et convertie en vapeur, qui est utilisée pour la production d'électricité.

5. Procédé selon l'une quelconque des revendications précédentes, **caractérisé en ce que** l'agent caloporteur est stocké dans un silo de stockage.

6. Procédé selon l'une quelconque des revendications précédentes, **caractérisé en ce que** le rayonnement solaire est dirigé vers le récepteur à haute température moyen d'une pluralité d'héliostats.

7. Procédé selon l'une quelconque des revendications 2 à 6, **caractérisé en ce que** l'agent caloporteur comprend un flux de particules solides ayant un point de fusion supérieur à 1200 °C et au moins des parties desdites particules solides sont fluidisées dans le réacteur ensemble avec l'hydrate d'alumine.

8. Procédé selon l'une quelconque des revendications 2 à 7, **caractérisé en ce que** l'agent caloporteur est séparé de l'oxyde d'aluminium produit en utilisant la taille de particule de l'agent caloporteur et de l'oxyde d'aluminium produit.

9. Procédé selon l'une quelconque des revendications précédentes, **caractérisé en ce que** l'agent caloporteur est soumis au récepteur à haute température avec une température comprise entre 200 et 400 °C, est déchargé de celui-ci à une température comprise entre 1000 et 1200 °C et ensuite chargé vers le réacteur, à partir duquel l'agent caloporteur est déchargé à une température comprise entre 500 et 700 °C et refroidi dans un échangeur de chaleur à des températures allant de 200 à 400 °C et est ensuite recyclé vers le récepteur à haute température.
